# EUROPÄISCHE PATENTSCHRIFT

(11) **EP 0 881 225 B1**
(45) Veröffentlichungstag und Bekanntmachung des Hinweises auf die Patenterteilung: **20.08.2003**
(21) Anmeldenummer: 98890163.3
(22) Anmeldetag: 28.05.1998
(51) Int. Cl.: C07F 5/02

(54) **Lumineszenzindikator**
Luminescence indicator
Indicateur de luminescence

(30) Priorität: 30.05.1997 AT 92997
(43) Veröffentlichungstag der Anmeldung: 02.12.1998
(73) Patentinhaber: F. HOFFMANN-LA ROCHE AG, 4070 Basel (CH)
(72) Erfinder: Wolfbeis, Otto S., 93051 Regensburg (DE); Daub, Jörg, 93057 Regensburg (DE); Gareis, Thomas, 93049 Regensburg (DE); Kollmannsberger, Matthias, 93047 Regensburg (DE); Heinl, Stefan, 93073 Neutraubling (DE); Werner, Tobias, 93051 Regensburg (DE); Huber, Christian, 93326 Abensberg (DE); Boila-Göckel, Andrei, 8010 Graz (AT); Leiner, Marco Jean Pierre, 8045 Graz (AT)
(74) Vertreter: Schwarz, Albin, Dr.

(56) Entgegenhaltungen:
- US-A- 5 439 828
- FALK, HEINZ ET AL: "The chemistry of bile pigments. LXXXIV. Preparation and luminescence of bichromophoric 5-aryldipyrrin derivatives" MONATSH. CHEM. ( 1990 ), 121(1), 67-76 , Bd. 121, Nr. 1, 1990, Seiten 67-76, XP000892157
- M. P. DEBRECZENY ET AL.: "Optical control of photogenerated ion pair lifetimes: An approach to a molecular switch" SCIENCE, Bd. 274, 25. Oktober 1996 (1996-10-25), Seiten 584-587, XP000892161

## Beschreibung

Die vorliegende Erfindung betrifft Lumineszenzindikatoren zur Bestimmung von Kationen, insbesondere Alkaliionen und H⁺-Ionen (pH-Wert), flüssiger, insbesondere wässeriger Medien. Bei dieser Bestimmung wird die zu bestimmende Substanz (=Analyt) mit einem Lumineszenzindikator (=Luminophor-Ionophor), der einen luminophoren Rest und einen ionophoren Rest aufweist, in Kontakt gebracht wird, welcher ionophore Rest mit dem in der Probe enthaltenen Analyt reagiert, wobei der luminophore Rest seine Lumineszenzeigenschaften ändert, wonach die Lumineszenz gemessen und mit dem Meßergebnis auf die Konzentration oder die Aktivität des Analyten geschlossen wird, d.h. das Kation bestimmt wird.

Ein derartiges Bestimmungsverfahren beruht auf dem sogenannten "PET-Effekt". Darunter wird ein mittels Photonen induzierter Elektronen-Transfer (photoinduced electron transfer = PET) vom ionophoren Rest bzw. Ionophor auf den luminophoren Rest bzw. Luminophor verstanden, der zu einer Verringerung der (relativen) Lumineszenzintensität und der Lumineszenzabklingzeit des Luminophors führt. Die Absorptions- und die Emissionswellenlängen werden jedoch dabei im wesentlichen nicht beeinflußt (J.R. Lakowicz in "Topics in Fluorescence Spectroscopy", Band 4: Probe Design and Chemical Sensing; Plenum Press, New York & London (1994)).

Durch die Bindung von Ionen an den Ionophor wird der PET-Effekt teilweise oder vollständig blockiert, sodaß es zu einem Anstieg der Lumineszenz des luminophoren Restes kommt. Somit kann durch Messung der Änderung der Lumineszenzeigenschaften, d.h. der Lumineszenzintensität und/oder der Lumineszenzabklingzeit, auf die Konzentration oder die Aktivität des zu bestimmenden Ions geschlossen werden.

Aus der US-A - 5,516,911 sind Fluoreszenzindikatoren für die intrazelluläre Kalziumbestimmung bekannt, welche fluoreszierende Substituenten tragen, die als optische Indikatoren wirken können.

Auch aus der US-A - 5,439,828 ist ein Bestimmungsverfahren bekannt, wobei als Luminophor-Ionophor Diaza-Kryptanden verwendet werden, die mit fluoreszierenden Cumarinen als Fluorophor funktionalisiert sind und je nach Struktur für Lithium-, Natrium- oder Kaliumionen spezifisch sind. Es wird angegeben, daß diese Luminophor-Ionophore in pH-neutralen Probemedien verwendet werden können und in solchen Systemen auch bevorzugt eingesetzt werden.

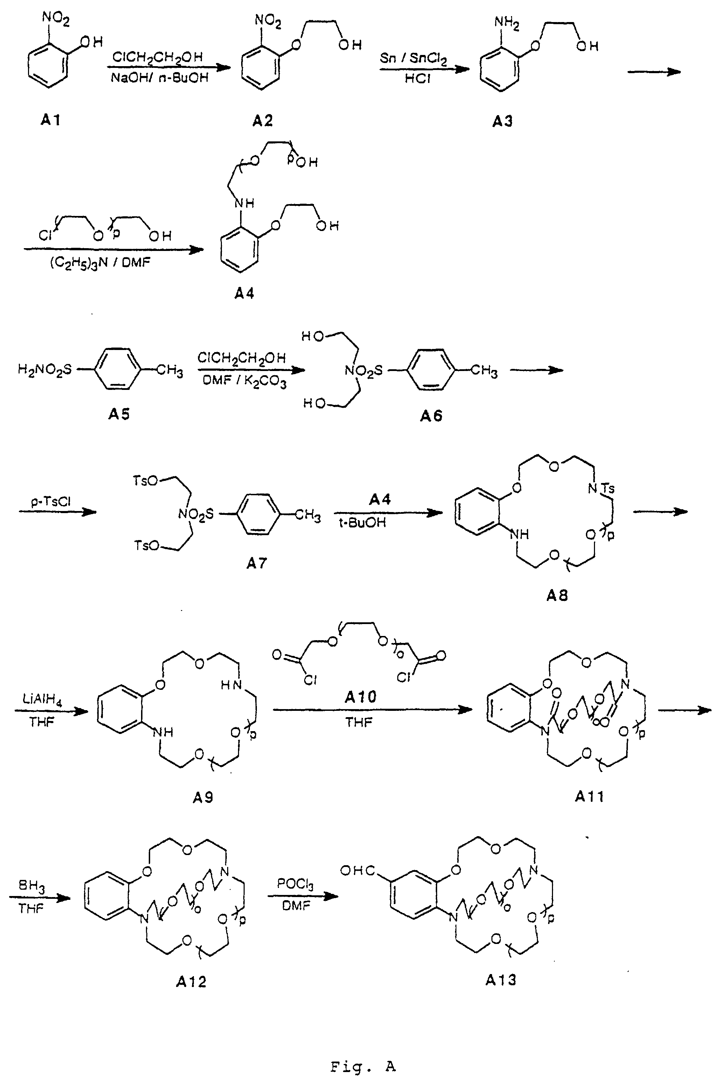

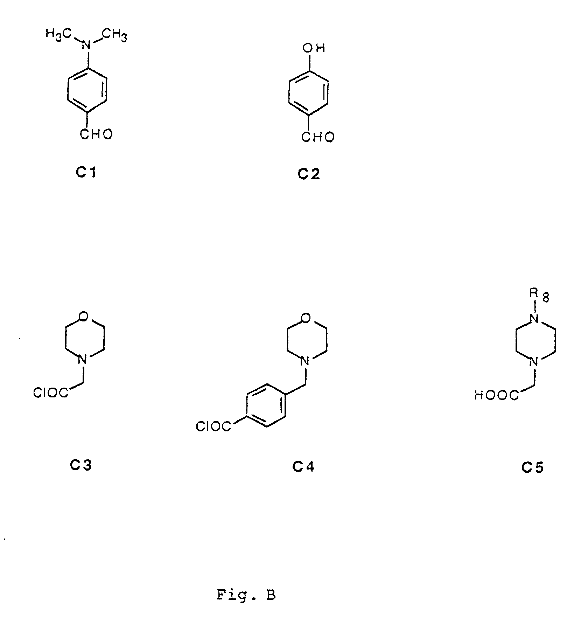

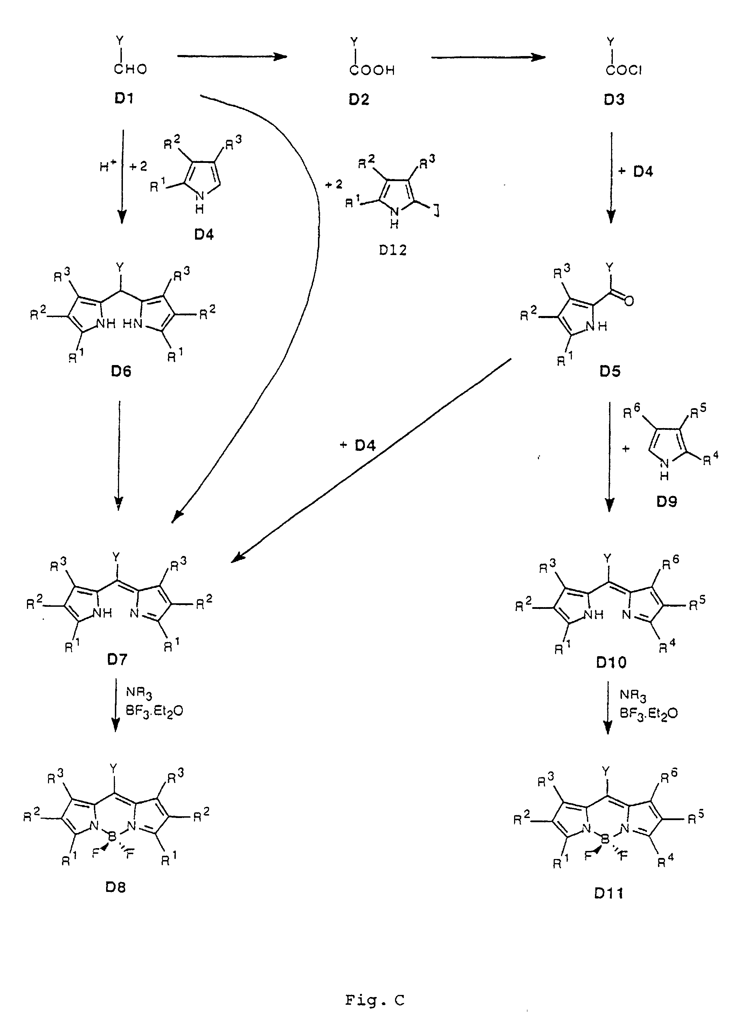

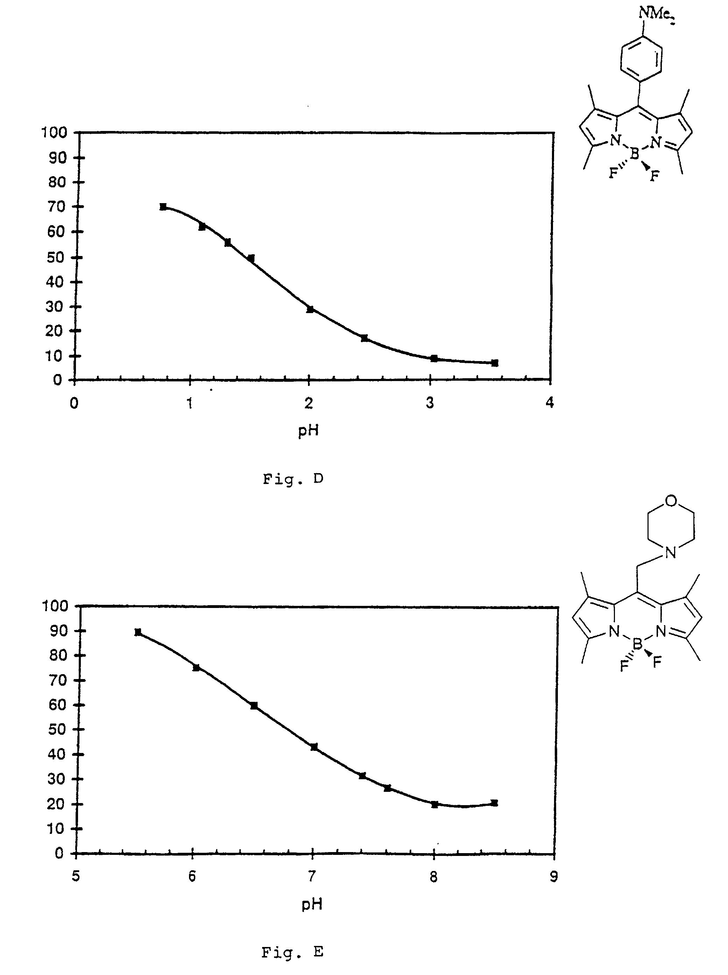

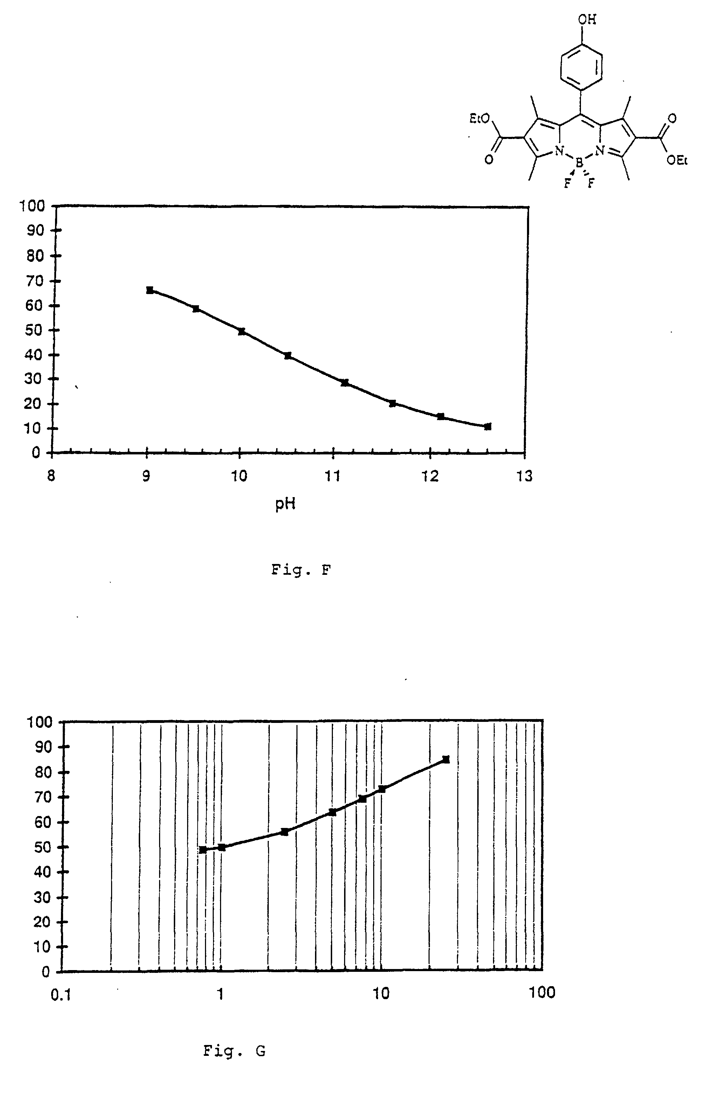

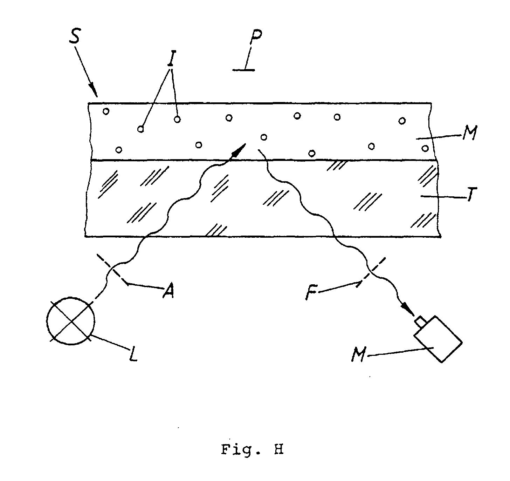

Untersuchungen (Frank Kastenholz, Inaugural-Dissertation, Universität zu Köln, 1993, Abb. 32, Seite 54) haben jedoch gezeigt, daß das Fluoreszenzsignal im physiologischen pH-Bereich signifikant vom pH-Wert der Probe abhängt und mit fallendem pH-Wert bereits ab einem pH von 7,4 stark ansteigt. Dies beeinträchtigt die Genauigkeit einer Bestimmung, die in biologischen Proben durchgeführt wird. Ferner haben die verwendeten Verbindungen den Nachteil, daß die verwendeten Cumarine Absorptionswellenlängen von etwa 336 nm aufweisen und daher nicht von kommerziellen LEDs angeregt werden können.

Diese Nachteile gelten auch für die in der US-A - 5,162,525 genannten Luminophor-Ionophore.

Aus Tetrahedron Letters, Band 31, Nr. 36, Seiten 5193-5196 (1990) sind Diaza-Kryptanden bekannt, bei denen beide Stickstoffatome an jeweils einen aromatischen Ring gebunden sind, d.h. Aryl-Stickstoffe bzw. Stickstoffe vom Anilintypus sind. Untersuchungen der Anmelderin haben gezeigt, daß sich diese Diaza-Kryptanden nicht zur Bestimmung von Kaliumionen eignen, wenn sie im physiologischen Konzentrationsbereich und physiologischen pH-Werten des Blutes (7,0-7,6) vorliegen.

Die US-A - 4,774,339, US-A - 5,187,288, US-A - 5,274,113 und die US-A - 5,248,782 beschreiben fluoreszierende Farbstoffe mit Dipyrromethenbordifluorid als Grundkörper und seine Derivate mit reaktiven Substituenten zwecks kovalenter Anbindung an Biomoleküle.

Aus der US-A - 5,433,896 sind fluoreszierende Farbstoffe bekannt, die als Grundkörper 1-[Isoindolyl]methylen-isoindiol aufweisen.

Farbstoffkonjugate des Dipyrromethenbordifluorids, wobei zumindest einer der reaktiven Substituenten ein Farbstoffmolekül kovalent an einen spezifischen Bindungspartner, z.B. ein Nukleotid oder ein Protein, bindet, sind aus der US-A - 5,451,663 beschrieben.

Die vorliegende Erfindung stellt sich die Aufgabe, Luminophor-Ionophore zur Verfügung zu stellen, die bei physiologischen pH-Werten keine signifikante Abhängigkeit der Lumineszenzeigenschaften vom pH-Wert der Probe zeigen und daher zur Bestimmung bei biologischen Proben geeignet sind.

Das erfindungsgemäße Verfahren soll ferner insbesondere bei Vorliegen physiologischer Alkaliionenkonzentrationen gut durchführbar sein, d.h. eine große Abhängigkeit des Lumineszenzsignals von der Konzentration des zu bestimmenden Alkaliions aufweisen.

Diese Aufgabe wird dadurch gelöst, daß als Indikator eine Verbindung der allgemeinen Formel I 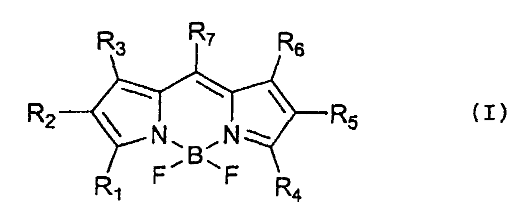 eingesetzt wird, in welcher eine der Gruppen R₁, R₂, R₃, R₄, R₅, R₆ und R₇ für einen ionophoren Rest steht, der mit einem in einer Probe enthaltenen Analyt reagiert, wobei der Grundkörper der allgemeinen Formel I (= luminophorer Rest) seine Lumineszenzeigenschaften ändert, und die übrigen Gruppen jeweils voneinander unabhängig Wasserstoff, eine lipophile oder hydrophile Gruppe oder eine reaktive Gruppe zur Kopplung an ein Polymer oder ein Biomolekül sind, oder R₂ zusammen mit R₃ ein aromatisches Ringsystem bildet und R₅ zusammen mit R₆ ein aromatisches Ringsystem bildet.

Als lipophile Gruppen eignen sich z.B. substituierte und unsubstituierte Alkylgruppen und Alkoxygruppen mit bis zu 20 C-Atomen.

Als hydrophile Gruppe eignen sich Alkylgruppen mit 1-17 C-Atomen und mindestens einer Hydroxylgruppe und/oder funktionelle Gruppen, die beim pH der Meßlösung in dissoziiertem Zustand vorliegen, wie z.B. Carbonsäuren, Sulfonsäuren und Phosphorsäuren.

Reaktive Gruppen z.B. zur Kopplung an aminofunktionalisierte Polymere, z.B. Aminocellulose und aminofunktionelle Polyacrylamide, sind z.B. aus der US-A - 4,774,339, Tabelle 4, bekannt.

R₇ steht bevorzugt für den ionophoren Rest, und R₃ und R₆ stehen bevorzugt voneinander unabhängig für Wasserstoff oder Methyl.

Die Reste R₁ und R₄ stehen vorzugsweise für eine lipophile Gruppe, insbesondere jeweils für tert. Butyl.

Für die erfindungsgemäße Verbindung der allgemeinen Formel I sind folgende Substitutionsmuster besonders bevorzugt:
Muster 1:
   - R₇:: ionophorer Rest;
   - R₁, R₄:: lipophile Gruppe, vorzugsweise t-Butyl;
   - R₃, R₆:: voneinander unabhängig -CH₃ oder H;
   - R₂ oder R₅:: Säurerest, vorzugsweise Propionsäurerest zwecks Immobilisierung;
Muster 2:
   - R₇:: ionophorer Rest;
   - R₁, R₄:: lipophile Gruppe, vorzugsweise t-Butyl;
   - R₃:: voneinander unabhängig -CH₃ oder H;
   - R₆: Säurerest, vorzugsweise Propionsäurerest zwecks Immobilisierung;
Muster 3:
   - R₇:: ionophorer Rest;
   - R₁:: lipophile Gruppe, vorzugsweise t-Butyl;
   - R₃, R₄, R₆:: voneinander unabhängig -CH₃ oder H;
   - R₅:: Säurerest, vorzugsweise Propionsäurerest zwecks Immobilisierung.

Bei der erfindungsgemäßen Verbindung der allgemeinen Formel I ist der ionophore Rest bevorzugt ein Diaza-Kryptand der allgemeinen Formel II 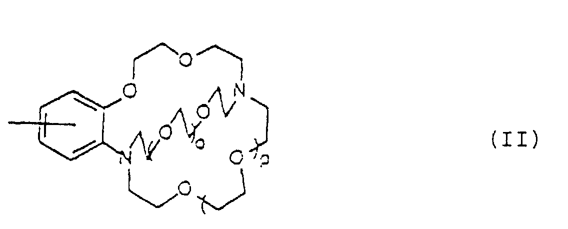 worin o und p unabhängig voneinander die ganze Zahl 0, 1 oder 2 bedeuten,
oder einer der folgenden Reste (R₈= Alkyl mit 1-20 C-Atomen)

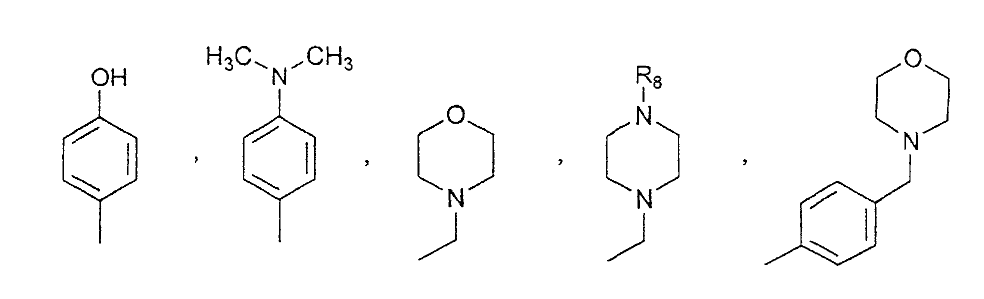

Der waagrechte Strich, der in der allgemeinen Formel II am Benzolring angebracht ist, soll die kovalente chemische Bindung symbolisieren, über welche der ionophore Rest direkt an die Verbindung der allgemeinen Formel I gebunden ist. Diese Bindung kann in ortho-, in den beiden meta- oder in para-Position zum Stickstoff vorhanden sein.

Es hat sich gezeigt, daß sich diese neuen Luminophor-Ionophore sehr gut zur Bestimmung von Kationen, insbesondere Alkaliionen bei physiologischen pH-Werten und bei physiologischen Konzentrationen, und H⁺-Ionen (pH-Wert) eignen.

Es hat sich des weiteren gezeigt, daß sich die erfindungsgemäßen Diaza-Kryptanden der allgemeinen Formel II insbesondere gut eignen, Lithiumionen im Konzentrationsbereich zwischen 0,30 und 2,1 mmol/l und Kaliumionen im Konzentrationsbereich zwischen 1,5 und 8,0 mmol/l zu bestimmen.

Als ionophorer Rest eignen sich alle Reste, mit welchen sich in Kombination mit dem Grundgerüst der allgemeinen Formel I ein PET-Effekt erzielen läßt. Aus der Literatur ist eine Vielzahl ionophorer Reste bekannt, die in Kombination mit dem Ionophor den PET-Effekt ergeben oder sich prinzipiell eignen. Durch Ankoppelung dieser ionophoren Reste an das obige Grundgerüst der allgemeinen Formel I werden neue Verbindungen erhalten, an denen der Fachmann prüfen kann, ob sich ein PET-Effekt erzielen läßt.

Wie dem Fachmann bekannt ist, ist für das Zustandekommen eines PET-Effektes insbesondere eine elektronische Entkoppelung des Elektronendonors des ionophoren Restes vom elektronischen System des luminophoren Restes (Grundkörper der allgemeinen Formel I) wesentlich. Die elektronische Entkoppelung ist z.B. daran erkenntlich, daß sich die Absorptions- und Emissionsspektren des luminophoren Restes hinsichtlich ihrer Wellenlänge nicht wesentlich ändern.

Zur Bestimmung von Lithiumionen wird bevorzugt ein Diaza-Kryptand der allgemeinen Formel II eingesetzt, in welcher o und p die Zahlen 0 bzw. 0 bedeuten.

Zur Bestimmung von Natriumionen wird bevorzugt ein Diaza-Kryptand der allgemeinen Formel II eingesetzt, in welcher o und p die Zahlen 0 bzw. 1 bedeuten, oder die Zahlen 1 bzw. 0 bedeuten.

Zur Bestimmung von Kaliumionen wird bevorzugt ein Diaza-Kryptand der allgemeinen Formel II eingesetzt, in welcher o und p die Zahlen 1 bzw. 1 bedeuten.

Nachfolgend wird die Erfindung beispielhaft noch näher beschrieben, wobei Synthese und Eigenschaften einiger bevorzugt verwendeter Indikatoren erläutert werden. Andere erfindungsgemäße Indikatoren können vom Fachmann auf analoge Weise hergestellt werden.

### 1. Synthese von Vorstufen für die erfindungsgemäßen Verbindungen

### 1.1. Synthese des ionophoren Restes für die erfindungsgemäßen Diaza-Kryptanden (Figur A)

### Allgemeines Verfahren (Figur A)

Der Syntheseweg für den ionophoren Teil der erfindungsgemäßen Diaza-Kryptanden ist in der Figur A allgemein dargestellt.

2-Nitrophenol A1 wurde mit 2-Chlorethanol in n-Butanol und Natriumhydroxid zu 2'-(2'-Hydroxyethoxy)nitrobenzol A2 umgesetzt. Durch Reduktion dieser Verbindung mit Sn/SnCl₂/HCl wurde das 2-(2-Hydroxyethoxy)anilin A3 erhalten, das weiter mit 2-Chlorethanol bzw. mit 2-(2-Chlorethoxy)ethanol in Dimethylformamid in Gegenwart von Triethylamin die N-alkylierten Anilinderivate A4 mit p=0 bzw. p=1 ergaben. Durch Erwärmen von 4-Toluolsulfonamid A5 mit 2-Chlorethanol in Dimethylformamid und Kaliumkarbonat wurde das N,N-Bis(2-hydroxyethyl)-4-toluolsulfonamid A6 erhalten, das weiter mit 4-Toluolsulfonsäurechlorid das entsprechende Ditosylat A7 ergab.

Das Ditosylat A7 wurde dann mit den N-alkylierten Anilinderivaten A4 mit p=0 bzw. p=1 in t-Butanol/Tetrahydrofuran und Kalium-t-butoxid als Base zu den entsprechenden Diaza-Kronenether-Toluolsulfonamiden A8 mit p=0 bzw. p=1 umgesetzt. Die reinen Produkte wurden durch Säulenchromatographie auf Kieselgel erhalten. Die Abspaltung der Tosyl-Gruppe erfolgte mit Lithiumaluminiumhydrid in Tetrahydrofuran unter Rückfluß, wobei die Diaza-Kronenether A9 mit p=0 bzw. p=1 erhalten wurden. 3-Oxapentan-dicarbonsäuredichlorid A10 mit o=0 und 3,6-Dioxaoctandicarbonsäure-dichlorid A10 mit o=1 wurden aus den entsprechenden Dicarbonsäuren mit Oxalsäure-dichlorid in Benzol erhalten. Die Herstellung der Kryptand-bis-amide A11 mit o=0, p=0 bzw. o=0 und p=1 erfolgte unter hoher Verdünnung aus den Diaza-Kronenethern A9 mit p=0 bzw. p=1 durch Umsetzung mit 3-Oxapentandicarbonsäure-dichlorid A10 mit o=0 in Tetrahydrofuran. Die Kryptand-bis-amide A11 mit o=1, p=0 bzw. o=1, p=1 wurden analog aus den Diaza-Kronenethern A9 mit p=0 bzw. p=1 mit 3,6-Diazaoctan-dicarbonsäuredichlorid A10 mit o=1 erhalten. Die Reduktion der Amid-Gruppen mit Boran-Tetrahydrofuran-Komplex in Tetrahydrofuran ergab die Diaza-Kryptanden A12 mit o=0, p=0 bzw. o=0, p=1 und o=1, p=0 bzw. o=1, p=1.

Die Einführung der Aldehydfunktion erfolgte durch direkte Formylierung mit Phosphoroxytrichlorid in Dimethylformamid, wobei die entsprechenden Diaza-Kryptand-Aldehyde A13 mit o=0, p=0 bzw. o=0, p=1 und o=1, p=0 bzw. o=1, p=1 erhalten wurden.

Auf analoge Weise können Verbindungen A13 erhalten werden, bei welchen o und p voneinander unabhängig auch die ganze Zahl 2 bedeuten.

### Beschreibung einzelner Reaktionschritte der Figur A

### 2-(2-Hydroxyethoxy)nitrobenzol A2:

10 g (71,88 mmol) 2-Nitrophenol A1 und 3,59 g (89,86 mmol) Natriumhydroxid wurden in 55 ml n-Butanol und 5 ml Wasser bei 70°C gelöst, 6,26 ml (7,52 g, 93,44 mmol) 2-Chlorethanol wurden langsam zugetropft und anschließend bei 100°C drei Tage lang kräftig gerührt. Nach Abkühlen wurde das Reaktionsgemisch filtriert, der Niederschlag mit Chloroform gewaschen und das Filtrat eingeengt. Der Rückstand wurde in Chloroform aufgenommen und drei Mal mit wässeriger 10%-iger Natriumhydroxid-Lösung gewaschen. Dann wurde die organische Phase über Natriumsulfat getrocknet und im Vakuum konzentriert. Es wurden 10,8 g hellgelbe Kristalle erhalten; Ausbeute 82%.
¹H-NMR (CDCl₃), δ (ppm): 3,97 (m, 3H), 4,22 (t, 2H), 6,98-7,13 (m, 2H), 7,52 (m, 1H), 7,83 (m, 1H).

### 2-(2-Hydroxyethoxy)anilin A3:

8,9 g (48,59 mmol) 2-(2-Hydroxyethoxy)nitrobenzol A2, 16,44 g (72,88 mmol) SnCl₂.2H₂O und 17,3 g (145,77 mmol) Zinn wurden in 30,84 ml wässeriger HCl (30%) und 25 ml Wasser bei 90°C 8 Stunden gerührt. Die Lösung wurde nach Abkühlen mit wässeriger 5n Natriumhydroxid-Lösung behandelt und bei 90°C 3 Stunden gerührt. Die wässerige Lösung wurde anschließend dekantiert, wobei nach Abkühlen das Rohprodukt auskristallisierte und abgesaugt wurde. Dieses wurde dann in Methanol aufgenommen, erwärmt und die Suspension filtriert. Das Filtrat wurde dann im Vakuum eingeengt. Es wurden 6 g hellbraune Kristalle erhalten; Ausbeute 80%.
¹H-NMR (CDCl₃), δ (ppm): 3,62 (m, 3H), 3,97 (t, 2H), 6,52-6,75 (m, 4H).

### N-[2-(2-Hydroxyethoxy)ethyl]-2-(2-hydroxyethoxy)anilin A4 (p=1) :

6 g (39,17 mmol) 2-(2-Hydroxyethoxy)anilin A3, 5 ml (5,85 g, 47 mmol) 2-(2-Chlorethoxy)ethanol und 8,19 ml (5,95 g, 58,75 mmol) Triethylamin wurden in 20 ml Dimethylformamid gelöst und 4 Tage bei 90°C gerührt. Nach Abkühlen wurde die Lösung filtriert, der Niederschlag mit Dichlormethan gewaschen und das Filtrat im Vakuum konzentriert. Der Rückstand wurde in Chloroform aufgenommen und 2 mal mit wenig Wasser gewaschen. Die Chloroform-Lösung wurde dann über Natriumsulfat getrocknet und eingeengt. Das zähflüssige Rohprodukt wurde durch Säulenchromatographie auf Kieselgel 60 mit Toluol/Aceton 1:2 als Laufmittel gereinigt. Es wurden 5 g braunes, zähflüssiges Öl erhalten; Ausbeute 53%.
¹H-NMR (CDCl₃), δ (ppm): 3,26 (m, 2H), 3,52 (m, 2H), 3,67 (m, 4H), 3,83 (m, 2H), 4,00 (m, 2H), 4,56 (br. s, 2H), 6,55-6,95 (m, 4H).

### N,N-Bis(2-hydroxyethyl)-4-toluolsulfonamid A6:

6,84 g (40 mmol) 4-Toluolsulfonamid A5, 7 ml (8,37 g, 104 mmol) 2-Chlorethanol und 27,64 g (200 mmol) Kaliumkarbonat wurden in 100 ml Dimethylformamid suspendiert und 3 Tage bei 110°C gerührt. Nach Abkühlen wurde das Reaktionsgemisch filtriert und der Niederschlag mit Chloroform gewaschen. Das Filtrat wurde eingeengt, der ölige Rückstand in Chloroform aufgenommen und schließlich mit einer 10%-igen Natriumhydroxid-Lösung gewaschen. Nach Konzentrieren der organischen Lösung wurden 8,4 g reines Produkt als hellgelbe Kristalle erhalten; Ausbeute: 81%.
¹H-NMR (CDCl₃), δ (ppm): 2,39 (s, 3H), 3,21 (t, 4H), 3,82 (t, 4H), 4,50 (br s, 2H), 7,29 (d, 2H), 7,65 (d, 2H).

### N,N-Bis(2-hydroxyethyl)-4-toluolsulfonamid-bis-toluolsulfonat A7:

4,54 g (17,5 mmol) N,N-Bis(2-hydroxyethyl)-4-toluolsulfonamid A6 wurden in 20 ml Aceton gelöst und auf -5°C abgekühlt. Danach wurden 8 g (42 mmol) 4-Toluolsulfonsäurechlorid dazugegeben und 10 min gerührt. Eine wässerige 25%-ige Natriumhydroxid-Lösung wurde bei -2°C langsam zugetropft, dann wurde weiter 8 h bei 0°C gerührt und das Reaktionsgemisch über Nacht in den Kühlschrank gestellt. Das Gemisch wurde über Eiswasser geschüttet, wobei das Produkt als zähflüssiges Öl ausfiel. Die wässerige Phase wurde vorsichtig dekantiert, das Produkt in Chloroform aufgenommen und mit Wasser gewaschen. Nach Einengen des Lösungsmittels wurden 9,2 g reines Produkt als hellgelbes, zähflüssiges Öl, das in der Kälte langsam kristallisierte, erhalten; Ausbeute: 92%.
¹H-NMR (CDCl₃), δ (ppm): 2,41 (s, 3H), 2,46 (s, 3H), 3,36 (t, 4H), 4,10 (t, 4H), 4,50 (br s, 2H), 7,29 (d, 2H), 7,34 (d, 4H), 7,62 (d, 2H), 7,76 (d, 4H).

### Diaza-Kronenether-Toluolsulfonamid A8 (p=1) :

5 g (20,72 mmol) Anilinderivat A4 (p=1) und 6,05 g (53,88 mmol) Kalium-t-butoxid wurden in 280 ml t-Butanol unter Stickstoff gelöst und 2h bei 60°C gerührt. Dann wurden 11,76 g (20,72 mmol) Toluolsulfonat A7 in 140 ml trockenem Tetrahydrofuran während 2h bei 40°C zugetropft. Das Reaktionsgemisch wurde anschließend 48h bei 60°C gerührt. Nach Abkühlen wurde die Lösung filtriert, der Niederschlag mit Dichlormethan gewaschen und das Filtrat im Vakuum eingeengt. Der Rückstand wurde in Chloroform gelöst und 2 mal mit Wasser gewaschen. Die organische Lösung wurde schließlich konzentriert, wobei sich ein dunkler, öliger Rückstand bildete. Aus diesem wurde das Produkt durch Säulenchromatographie auf Kieselgel und Toluol/Aceton 10:9 als Laufmittel erhalten: 1 g gelbes, zähflüssiges Öl; Ausbeute: 10%.
¹H-NMR (CDCl₃), δ (ppm): 2,40 (s, 3H), 3,20-4,50 (m, 20H), 6,55-6,96 (m, 4H), 7,27 (d, 2H), 7,67 (d, 2H).

### Diaza-Kronenether A9 (p=1) :

0,41 g (10,8 mmol) Lithiumaluminiumhydrid wurden in 10 ml trockenem Tetrahydrofuran unter Stickstoff suspendiert, und 0,5 g (1,08 mmol) Diaza-Kronenether-Toluolsulfonamid A8 (p=1) in 10 ml Tetrahydrofuran wurden langsam zugetropft. Das Reaktionsgemisch wurde 3 Tage unter Rückfluß gerührt. Nach Abkühlen wurde überschüssiges Lithiumaluminiumhydrid mit Tetrahydrofuran/Wasser 2:1 (v/v) zersetzt, filtriert und der Niederschlag mit Dichlormethan gewaschen. Der Rückstand wurde in Dichlormethan aufgenommen, filtriert und das Lösungsmittel im Vakuum entfernt. Es wurden 0,25 g hellbraunes Öl erhalten; Ausbeute: 75%.

### Kryptand-bis-amid A11 (0=1, p=1) :

Diese Reaktion wurde nach der Methode von R. Crossley, Z. Goolamali, P.G. Sammes, J. Chem. Soc. Perkin Trans. 2, 1994, 1615-1622 durchgeführt. Das Dicarbonsäure-dichlorid A10 (o=0) wurde nach der Methode von B. Dietrich, J.M. Lehn, J.P. Sauvage, J. Blanzat, Tetrahedron 1973, 29, 1629-1645 erhalten.

0,13 g (1,67 mmol) Pyridin wurden in 240 ml trockenem Tetrahydrofuran gelöst und auf 0°C abgekühlt. 0,25 g (0,805 mmol) Diaza-Kronenether A9 (p=1) in 40 ml trockenem Tetrahydrofuran und 0,17 g (0,605 mmol) 3,6-Dioxaoctandicarbonsäure-dichlorid A10 (o=1) in 40 ml trockenem Tetrahydrofuran wurden dann gleichzeitig während 4 Stunden zugetropft. Das Reaktionsgemisch wurde dann weitere 40 Stunden bei 0°C gerührt. Das Gemisch wurde filtriert und das Tetrahydrofuran entfernt. Der ölige, braune Rückstand wurde in Chloroform gelöst, mit verdünnter HCl und dann mit Wasser gewaschen. Die Chloroform-Lösung wurde über Natriumsulfat getrocknet und konzentriert. Es wurde ein öliger, hellbrauner Rückstand erhalten; Ausbeute: 0,12 g (33%).

### Diaza-Kryptand A12 (o=1, p=1) :

In einem Dreihalskolben, versehen mit Stickstoffzufuhr, Septum und Rückflußkühler mit Kalziumchlorid-Röhrchen, wurden 0,12 g (0,27 mmol) Kryptand-bis-amid A11 (o=1, p=1) vorgelegt. 2,5 ml trockenes Tetrahydrofuran wurden durch das Septum mit Hilfe einer Spritze dazugegeben, und die Suspension wurde in einem Eisbad gekühlt. 2,2 ml (2,2 mmol) einer 1 m Boran-THF-Komplex-Lösung wurden dann vorsichtig ebenfalls durch das Septum zugegeben. Nach 10 min wurde das Eisbad entfernt, das Reaktionsgemisch bei 30 min bei Raumtemperatur und anschließend 2 Stunden unter Rückfluß gerührt. Nach Abkühlen wurde das Gemisch vorsichtig mit 1 ml Wasser und 10 ml wässeriger 6 n HCl versetzt und 1 Stunde bei Raumtemperatur gerührt. Das Lösungsmittel wurde im Vakuum entfernt und die erhaltene weiße Suspension mit wässeriger Lithiumhydroxid-Lösung auf pH 10 gebracht. Die wässerige Phase wurde mit Chloroform extrahiert. Nach Konzentrieren der Lösung im Vakuum wurde ein hellgelbes Öl erhalten; Ausbeute: 0,1 g (88%).

### Diaza-Kryptand-Aldehyd A13 (o=1, p=1) :

0,5 g (1,18 mmol) Diaza-Kryptand A12 (0=1, p=1) wurden in 1,5 ml Dimethylformamid gelöst und auf -10°C gekühlt. 0,22 ml (0,36 g, 2,35 mmol) Phosphoroxytrichlorid wurden vorsichtig zugetropft, so daß die Temperatur 0°C nicht überschritt. Das Reaktionsgemisch wurde 15 min bei -5°C, dann über Nacht bei Raumtemperatur und schließlich 1 Stunde bei 60°C gerührt. Nach Abkühlen wurde das Gemisch mit Wasser versetzt, mit einer wässerigen, konzentrierten Lithiumhydroxid-Lösung auf pH 9 gebracht und 30 min gerührt. Die Lösung wurde 3 mal mit je 30 ml Chloroform extrahiert und die organische Phase im Vakuum konzentriert. Es wurden 0,32 g gelbes Öl erhalten; Ausbeute: 60%.

### 1.2. Ausgangsprodukte zur Herstellung der erfindungsgemäßen pH-Indikatoren (Figur B)

Die Ausgangsprodukte zur Herstellung der erfindungsgemäßen pH-Indikatoren sind in der Figur B dargestellt. Es handelt sich dabei um die Verbindungen C₁ bis C₅, wobei der Rest R₈ für -(CH₂)ₙCH₃, wobei n eine ganze Zahl von 0 bis 20 sein kann, steht.

Die Verbindungen C₁ und C₂ sind kommerziell erhältlich. Die Herstellung der Verbindungen C₃, C₄ und C₅ ist bekannt (MC Angelastro, LE Baugh, TM Chen, J.Med. Chem. 37, 4538-4553, 1994 bzw. H Wang, DD Weller, Tetrahedron Lett. 32, 7385-7388, 1991 bzw. Foye, Fedor, J. Pharm. Assoc. 48, 412, 1959).

### 2. Synthese von erfindungsgemäßen Verbindungen

### 2.1. Allgemeine Synthese (Schema C)

### 2.1.1. Syntheseweg 1 (symmetrisch substituierte Derivate D8)

Ein Aldehyd D1, in welchem Y für den ionophoren Rest der allgemeinen Formel (II) oder einen der Reste 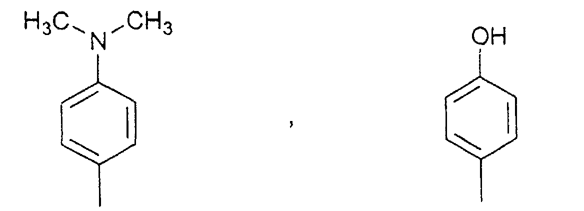 steht, d.h. die Verbindung A13, C1 oder C2, und das Pyrrolderivat D4 wurden in einem organischen Lösungsmittel gelöst und mit einer Säure versetzt, wobei die Verbindung D6 als Zwischenprodukt entstand. Durch Zugabe von p-Chloranil in einem geeigneten Lösungsmittel wurde durch Oxidation von D6 die Verbindung D7 erhalten. Im Falle der p-Hydroxybenzaldehydderivate kann direkt aus der Reaktionslösung das Dipyrromethen D7 erhalten und auch isoliert werden.

Alternativ kann das Dipyrromethen D7 auch durch Umsetzung von D1 mit der Jod-Verbindung D12 hergestellt werden.

Die Umsetzung von D7 zum symmetrisch substituierten 4,4-Difluor-4-bora-3a,4a-diaza-s-indazenderivat D8 erfolgte durch abwechselnde Zugabe von Ethyldiisopropylamin und BF₃.Et₂O zu der Reaktionslösung.

Die Reaktionslösung von D8 wurde mit Wasser gewaschen, über Magnesiumsulfat getrocknet und im Vakuum konzentriert. Nach mehrmaliger Säulenchromatographie an Kieselgel wurde die erfindungsgemäße Verbindung D8 erhalten, welche aus einem geeigneten Lösungsmittel (z.B. Chloroform/Hexan) umkristallisiert werden konnte.

### 2.1.2. Syntheseweg 2 (symmetrisch substituierte Derivate D8)

Der obige Aldehyd D1, in welchem Y für den ionophoren Rest der allgemeinen Formel (II) steht, wurde zur Carbonsäure D2 oxidiert und anschließend in das entsprechende Säurechlorid D3 umgewandelt. Gleichermaßen konnte die Verbindung C5 als Verbindung D2 eingesetzt und in das Säurechlorid D3 umgewandelt werden.

Das oben erhaltene Säurechlorid D3 bzw. die Säurechloride C3 und C4 wurden dann mit dem Pyrrolderivat D4 zum Keton D5 umgesetzt, und durch weitere Reaktion mit D4 wurde D7 erhalten. Die Umwandlung von D7 in D8 erfolgte wie bereits beschrieben.

Die Reaktionslösung von D8 wurde mit Wasser gewaschen, über Magnesiumsulfat getrocknet und im Vakuum konzentriert. Nach mehrmaliger Säulenchromatographie an Kieselgel wurde die erfindungsgemäße Verbindung D8 erhalten, welche aus einem geeigneten Lösungsmittel (z.B. Chloroform/Hexan) umkristallisiert werden konnte.

### 2.1.3. Syntheseweg 3 (unsymmetrisch substituierte Derivate D11)

Das Keton D5, das wie oben beschrieben erhalten wurde, konnte mit einem von D4 verschiedenen Pyrrolderivat D9 zu D10 umgesetzt werden. Durch Zugabe von Ethyldiisopropylamin und BF₃.Et₂O zu der Reaktionslösung wurde aus D10 das unsymmetrisch substituierte 4,4-Difluor-4-bora-3a,4a-diaza-s-indazenderivat D11 erhalten.

Die Reaktionslösung von D11 wurde mit Wasser gewaschen, über Magnesiumsulfat getrocknet und im Vakuum konzentriert. Nach mehrmaliger Säulenchromatographie an Kieselgel wurde die erfindungsgemäße Verbindung D11 erhalten, welche aus einem geeigneten Lösungsmittel (z.B. Chloroform/Hexan) umkristallisiert werden konnte.

### 2.1.4. Synthese spezifischer Verbindungen

### 1,3,5,7-Hexamethyl-8-(4-dimethylamino-phenyl)-4,4-difluoro--4-bora-3a,4a-diaza-s-indazen D8:

4 mmol (380 mg) Dimethylpyrrol D4 (R₁,R₂= -CH₃) und 2 mmol (298 mg) p-Dimethylaminobenzaldehyd C1 wurden in 300 ml Methylenchlorid abs. unter Stickstoff gelöst und mit 40 µl Trifluoressigsäure versetzt. Nach dreistündigem Rühren bei Raumtemperatur wurde eine Lösung von 2 mmol (492 mg) p-Chloranil in 200 ml Methylenchlorid zugegeben und weitere 30 min gerührt. Dann wurden 3 ml Ethyldiisopropylamin und 3 ml BF₃.Et₂ zugesetzt und 15 min gerührt. Die Reaktionslösung wurde mit Wasser gewaschen, über Magnesiumsulfat getrocknet, und das Lösungsmittel wurde abgedampft. Nach mehrmaliger chromatographischer Reinigung an Kieselgel mit Chloroform wurde ein roter Feststoff D8 erhalten, der aus Chloroform/Hexan umkristallisiert wurde (Ausbeute: 270 mg; 37%). Fp: 233-236°C.

Elementaranalyse (in %) berechnet/gefunden: C: 68,66/68,40; H: 6,53/6,33; N: 11,44/11,32.
¹H-NMR (250 MHz, CDCl₃, TMS, δ in ppm): 1,49 (s, 6H, CH₃), 2,55 (s, 6H, CH₃), 3,02 (s, 6H, N(CH₃)₂), 5,96 (s, 2H, Pyrrol), 6,77 (2H, AA'BB', Phenyl), 7,06 (2H, AA'BB', Phenyl).
MS (EI-MS, 70 eV): 367 (100%), M^{+·} 352 (24%), (-^{·}CH₃), 347 (34%), (-HF).

Dieser Lumineszenzindikator eignet sich als pH-Indikator im sauren Bereich.

### 1,3,5,7-Tetramethyl-2,6-bis(ethoxycarbonyl)-8-(4-hydroxyphenyl)-dipyrromethen D7:

500 mg (1,71 mmol) 2,4-Dimethyl-3-ethoxycarbonyl-5-jodpyrrol und 104 mg (0,89 mmol) 4-Hydroxybenzaldehyd wurden in 15 ml Ethanol gelöst, mit 100 µl HCl konz. versetzt und 30 min unter Rückfluß erhitzt, wobei sich bereits nach wenigen Minuten eine intensiv rote Lösung bildete. Bei 40°C wurden 150 ml konz. NH₃ und 50 ml H₂O zugegeben. Danach wurde 10 min bei Raumtemperatur gerührt, mit 2,0 l CH₂Cl₂ ausgezogen, über Na₂SO₄ getrocknet und vom Lösungsmittel befreit. Anschließend wurde zuerst an SiO₂ mit Methanol chromatographiert, aus Methanol/H₂O umkristallisiert und an SiO₂ mit Ethanol:CH₂Cl₂ = 2:1 chromatographiert. Nach anschließender Chromatographie an SiO₂ mit Ethylacetat konnte das Produkt durch Trocknen im Ölpumpenvakuum erhalten werden (Ausbeute: 120 mg metallisch glänzende, dunkelgrüne Feinkristalle (0,28 mmol, 32,3% der Theorie; Zersetzung ab 176°C).
IR (KBr, u [cm⁻¹]: 3254, 2980, 2930, 2859, 1704, 1676, 1602, 1563, 1496, 1440, 1371, 1325, 1258, 1163, 1092, 544.

### 1,3,5,7-Tetramethyl-2,6-bis(ethoxycarbonylethyl)-8-(4-hydroxyphenyl)-4,4-difluor-4-bora-3a,4a-diaza-s-indazen D8:

310 mg (0,71 mmol) Phenoldipyrromethen wurden in 500 ml CH₂Cl₂ gelöst und mit 0,5 ml Portionen von N,N-Diisopropyl-N-ethylamin und BF₃.Et₂O versetzt, bis am DC kein weiterer Umsatz mehr zu beobachten war. Anschließend wurde 1 h bei Raumtemperatur gerührt, vom Lösungsmittel befreit, anschließend an SiO₂ mit Ethylacetat chromatographiert und aus Chloroform/Et₂O umkristallisiert. Nach erneuter Chromatographie an SiO₂ mit EE und Trocknen im Ölpumpenvakuum konnte das Produkt rein erhalten werden (Ausbeute: 110 mg orange Feinkristalle, 0,23 mmol, 23,1% der Theorie; Fp: 248-250°C, unter Zersetzung).
¹H-NMR (250 MHz, CDCl₃, TMS, δ in ppm): 7,01 (d, 2H, Phenyl-H), 6,99 (d, 2H, Phenyl-H), 5,68 (bs, 1H, OH), 4,29 (q, 4H, OCH₂CH₃), 2,83 (s, 6H, CH₃+CH₃), 1,72 (s, 6H, CH₃+CH₃), 1,34 (t, 6H, OCH₂CH₃).

Dieser Lumineszenzindikator eignet sich als pH-Indikator im alkalischen Bereich.

### 8-Diaza-Kryptand-3,5-bis-(methoxycarbonylethyl)-4,4-difluoro-4-bora-3a,4a-diaza-s-indazen D8 mit o=1, p=1, R₁=R₄= -CH₂CH₂-COOCH₃, R₂=R₃=R₅=R₆= H, Y=Diaza-Kryptand A12 mit o=1 und p=1:

0,31 g (2 mmol) 2-(2-Pyrrolyl)-propionsäure-methylester D4 und 0,45 g (1 mmol) Diaza-Kryptand-Aldehyd A13 mit o=1 und p=1 wurden unter Stickstoff in 100 ml trockenem Dichlormethan gelöst, 10 min gerührt und mit 40 µl Trifluoressigsäure versetzt. Nach 1,5 stündigem Rühren bei Raumtemperatur wurde eine Lösung von 0,49 g (2 mmol) Tetrachlor-p-benzochinon in 20 ml Tetrahydrofuran zugesetzt. Dabei entstand eine dunkelrote Lösung, die weitere 15 min gerührt wurde. Dann wurden abwechselnd 5 mal 1 ml Diisopropylethylamin und 5 mal 1 ml Bortrifluorid-Diethyletherat zugesetzt und 30 min gerührt. Die Lösung wurde mit Wasser gewaschen, über Natriumsulfat getrocknet und im Vakuum konzentriert. Der Rückstand wurde mittels Säulenchromatographie auf Kieselgel und Chloroform/Ethylacetat 9:1 als Laufmittel gereinigt, wobei 0,16 g orangefarbenes Pulver erhalten wurden (Ausbeute: 20%).

### Allgemeine Beschreibung der Hydrolyse der Diester D8 zu Dicarbonsäuren:

Die erhaltenen Diester D8 (Y= Diaza-Kryptand A12 mit o=1 und p=1) wurden in Tetrahydrofuran gelöst und auf das doppelte Volumen mit Wasser verdünnt. Das Gemisch wurde mit konzentrierter H₃PO₄ sauer gestellt und 4 Tage bei 70°C gerührt. Dies Lösung wurde im Vakuum konzentriert, der Rückstand in Chloroform aufgenommen, über Natriumsulfat getrocknet und das Lösungsmittel entfernt. Der Rückstand wurde anschließend mittels Säulenchromatographie auf Kieselgel und Chloroform/Methanol als Laufmittel gereinigt. Als Nebenprodukt wurde auch die Monocarbonsäure erhalten.

Dieser Lumineszenzindikator eignet sich zur Bestimmung physiologischer Natriumionen-Konzentrationen.

### Herstellung der Mono-Ester: R₁= -CH₂-CH₂-COO-CH₃, R₄= -CH₂-CH₂-COOH, und der Di-Säuren: R₁ = R₄ = -CH₂-CH₂-COOH:

Das orange Pulver aus den beiden vorangegangenen Synthese-Beispielen wurde in 4 ml Tetrahydrofuran gelöst, und es wurde mit 6 ml Wasser verdünnt. Dann wurden 0,3 ml 85% H₃PO₄ zugegeben und 4 Tage auf 70°C erhitzt. Das Tetrahydrofuran wurde abgedampft und der Rückstand wurde 2 mal mit 50 ml Chloroform extrahiert und über K₂SO₄ getrocknet. Das Lösungsmittel wurde abgedampft, wobei 0,17 g Öl erhalten wurden. Dieses Öl wurde mittels einer Säule gereinigt, die mit Silikagel 100 gepackt war (Eluierungsmittel: Chloroform/Methanol; 3:1), wobei 0,04 g Mono-Ester und 0,02 g Di-Säure erhalten wurden.

Der Monoester wurde verwendet, um die Eigenschaften in Lösung zu messen, während die Di-Säure gemäß nachstehendem Verfahren auf Aminocellulose immobilisiert und in einem Sensor vermessen wurde, wie unten beschrieben wird.

### Herstellung einer pH-sensitiven Schicht zur Verwendung in einem Sensor:

0,1 g trockenes, hydrophiles Polymer D5 (Tyndale Plains-Hunter LTD, Ringoes, NJ 08551) und 1,92 g Lumineszenzindikator wurden in 1,8 g Ethanol und 0,23 g Wasser gelöst. Das Gemisch wurde bei Raumtemperatur über Nacht stark gerührt. 100 µl dieser Lösung wurden auf einen staubfreien Polyesterträger von 125 mm mit einer Breite von 25 mm (Goodfellow; Cambridge; Prod. Nr. LS 146585) aufgetragen. Nach Abdampfung des Ethanols wurde eine 10 µm dicke, pH-sensitive Schicht über dem Polyesterträger erhalten. Aus diesem Träger wurde ein Scheibe für einen Sensor geschnitten.

Um das Polymer zu konditionieren, wurde die erhaltene Sensorscheibe 2 Stunden in einer 100 mmol/l NaCl-Lösung gelagert.

### Herstellung einer Na⁺, K⁺-sensitiven Schicht zur Verwendung in einem Sensor:

0,03 mequ. des Di-Säure-Indikators, 0,06 g (0,3 mmol) N,N-Dicyclohexyl-1,3-carbodiimid, 0,04 g (0,3 mmol) N-Hydroxysuccinimid und 0,5 g aktivierte Cellulose (hergestellt gemäß SU-A - 1,028,677, CA 99:177723h) wurden in 2 ml Dimethylformamid 20 Stunden suspendiert. Anschließend wurde die Cellulose abfiltriert, 5 mal mit 5 ml Dimethylformamid, 5 ml Wasser, 2 mal mit 5 ml 0,2 n HCl, 5 ml Wasser, 2 mal mit 5 ml 0,2 n NaOH, 10 mal mit 5 ml Wasser, 2 mal mit 5 ml Aceton und 2 mal mit 5 ml Ether gewaschen, und 16 Stunden bei Raumtemperatur getrocknet. Anschließend wurde die Cellulose gesiebt (25 µm).

### Sensorscheiben wurden wie folgt hergestellt:

0,25 g gesiebte (25 µm) Aminocellulosefasern mit immobilisiertem Indikator wurden in 4,75 g 10% Hydrogel D4 (Tyndale Plains-Hunter LTD. Ringoes, NJ 08551) in 90% Ethanol-Wasser 16 Stunden suspendiert. Die erhaltene homogene Dispersion wurde auf eine Polyesterfolie ((Goodfellow; Cambridge; Prod. Nr. LS 146585) bis zu einer Trockendichte von 10 µm aufgetragen. Diese Folie wurde mit 3% Aktivkohle in 10% D4-Hydrogel bis zu einer Trockendichte von 5 µm überschichtet, worauf eine kleine Scheibe mit einem Durchmesser von 2,5 cm herausgeschnitten wurde. Diese Scheibe wurde zur Aktivierung mindestens 16 Stunden im Puffer gelassen.

Eine Methode zum Schneiden und Messen von Sensorscheiben wurde von M.J.P. Leiner und P. Hartmann in Sensors and Actuators B, 11 (1993), 281-289 ("Theory and practice in optical pH sensing") beschrieben.

### 3. Lumineszenzeigenschaften einiger erfindungsgemäßer Verbindungen

Die Figuren D bis G zeigen die Lumineszenzeigenschaften einiger erfindungsgemäßer Indikatoren in Abhängigkeit vom pH-Wert bzw. der jeweiligen Konzentration an Alkaliionen. Die Ordinaten der dargestellten Diagramme geben jeweils die relativen Lumineszenzintensitäten an.

### 3.1. Figur D: 4,4-Difluor-4-bora-3a,4a-diaza-s-indazen-Derivat (allgemeine Formel I, mit R₇ = 4-Dimethylamino-phenyl als pH-sensitiver, ionophorer Rest; R₁, R₃, R₄ und R₆ = Methyl; R₂ und R₅ = H)

Mit der in Fig. D gezeigten Verbindung wurde eine Sensorscheibe mit einer pH-sensitiven Schicht hergestellt, und in einer von M.J.P. Leiner und P. Hartmann in Sensors and Actuators B 11, 281-289, 1993 beschriebenen Anordnung wurde die pH-abhängige Lumineszenzintensität gemessen.

Die Meßanordnung ist in der Figur H schematisch dargestellt, wobei ein Abschnitt der Sensorscheibe mit S bezeichnet ist. Die im hydrophilen ionenpermeablen Polymer (Hydrogel) gelöste Verbindung ist mit I bezeichnet. Diese Schicht M wird von einem für die Anregungs- und Meßstrahlung durchlässigen Träger T, der eine transparente Folie ist, getragen.

Die Verbindung I kann erfindungsgemäß auch an die ionenpermeable Matrix direkt kovalent gebunden sein oder in der Matrix physikalisch gelöst vorliegen.

Zur Messung wurde die Sensorscheibe in eine lichtundurchlässige, thermostatisierte Durchflußzelle eingebracht und mit Proben P, die 0,1 mol/l NaCl enthielten und verschiedene pH-Werte aufwiesen, in Kontakt gebracht. Die pH-Werte der Proben wurden mit einer Standard-Glaselektrode bestimmt.

Die optische Meßeinrichtung bestand aus einer blauen LED als Lichtquelle A, einer Photodiode M als Detektor, optischen Filtern A und F zur Auswahl der Wellenlängen, einer faseroptischen Anordnung zur Leitung des Anregungslichtes in die Polymerschicht M und zur Leitung des Emissionslichtes zum Photodetektor M, sowie einer Einrichtung zur elektronischen Signalverarbeitung (nicht dargestellt). Anregungsseitig wurde ein Interferenzfilter (Peak-Transmission bei 480 nm) und emissionsseitig ein 520 nm cut-off Kantenfilter verwendet.

Die in der Fig. D dargestellte Kurve stellt somit eine pH-Titrationskurve dar.

### 3.2. Figur E: 4,4-Difluor-4-bora-3a,4a-diaza-s-indazen-Derivat (allgemeine Formel I, mit R₇ = -(CH₂)-Morpholino als pH-sensitiver, ionophorer Rest; R₁, R₃, R₄ und R₆ = Methyl; R₂ und R₅ = H)

Es wurde das in Figur D dargestellte Beispiel wiederholt, außer daß das oben genannte Morpholino-Derivat eingesetzt und bei anderen pH-Werten gemessen wurde.

### 3.3. Figur F: 4,4-Difluor-4-bora-3a,4a-diaza-s-indazen-Derivat (allgemeine Formel I, mit R₇ = 4-Hydroxyphenyl als pH-sensitiver, ionophorer Rest; R₁, R₃, R₄ und R₆ = Methyl; R₂ und R₅ = -COO-CH₂-CH₂-CH₃)

Es wurde das in Figur D dargestellte Beispiel wiederholt, außer daß das oben genannte Hydroxyphenyl-Derivat eingesetzt und bei anderen pH-Werten gemessen wurde.

### 3.4. Figur G: 4,4-Difluor-4-bora-3a,4a-diaza-s-indazen-Derivat (allgemeine Formel I, mit R₇ = Kryptand als K⁺-sensitiver, ionophorer Rest; R₂, R₃, R₅ und R₆ = H; R₁ und R₄ = -CH₂-CH₂-COO-NH-Polymer)

Die Figur G wurde analog Figur E erhalten, wobei jedoch anstelle des Na⁺-Indikators der angegebene K⁺-Indikator eingesetzt wurde und die Lumineszenzintensität in Abhängigkeit von verschiedenen Kaliumionen-Konzentrationen; Abszisse logarithmische Skala) in Gegenwart von 0,145 mol/l NaCl gemessen wurde.

## Patentansprüche

1. Verbindung der allgemeinen Formel I 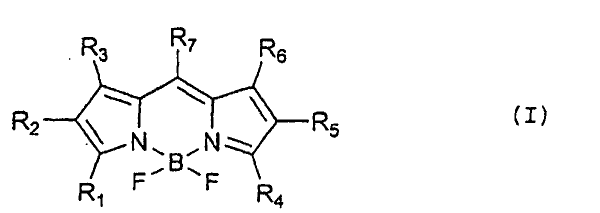 in welcher eine der Gruppen R₁, R₂, R₃, R₄, R₅, R₆ und R₇ für einen ionophoren Rest steht, der mit einem in einer Probe enthaltenen Analyt reagiert, wobei der Grundkörper der allgemeinen Formel I (= luminophorer Rest) seine Lumineszenzeigenschaften ändert, und die übrigen Gruppen jeweils voneinander unabhängig Wasserstoff, eine lipophile oder hydrophile Gruppe oder eine reaktive Gruppe zur Kopplung an ein Polymer oder ein Biomolekül sind, oder R₂ zusammen mit R₃ ein aromatisches Ringsystem bildet und R₅ zusammen mit R₆ ein aromatisches Ringsystem bildet.

2. Verbindung nach Anspruch 1, **dadurch gekennzeichnet, daß** R₇ für den ionophoren Rest steht und R₃ und R₆ voneinander unabhängig für Wasserstoff oder Methyl stehen.

3. Verbindung nach einem der Ansprüche 1 oder 2, **dadurch gekennzeichnet, daß** die Reste R₁ und R₄ für eine, lipophile Gruppe, insbesondere jeweils für tert. Butyl, stehen.

4. Verbindung nach einem der Ansprüche 1 bis 3, **dadurch gekennzeichnet, daß** der ionophore Rest ein Diaza-Kryptand der allgemeinen Formel II 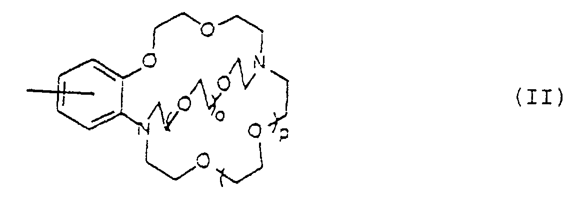 worin o und p unabhängig voneinander die ganze Zahl 0, 1 oder 2 bedeuten,
oder einer der folgenden Reste 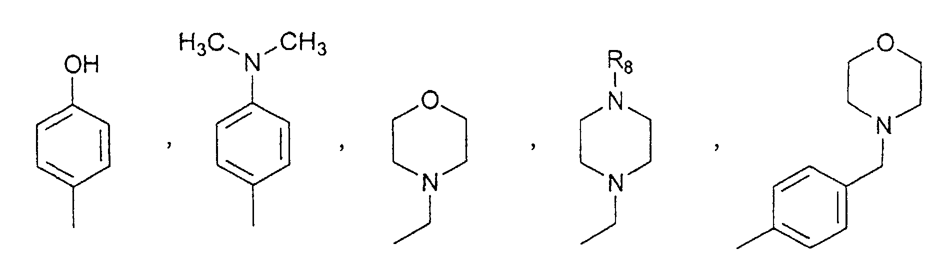 mit R₈ = Alkyl mit 1-20 C-Atomen,
ist.

5. Diaza-Kryptand nach Anspruch 4 zur Bestimmung von Lithiumionen, **dadurch gekennzeichnet, daß** o und p die Zahlen 0 bzw. 0 bedeuten.

6. Diaza-Kryptand nach Anspruch 4 zur Bestimmung von Natriumionen, **dadurch gekennzeichnet, daß** o und p die Zahlen 0 bzw. 1 bedeuten, oder die Zahlen 1 bzw. 0 bedeuten.

7. Diaza-Kryptand nach Anspruch 4 zur Bestimmung von Kaliumionen, **dadurch gekennzeichnet, daß** o und p die Zahlen 1 bzw. 1 bedeuten.

## Claims

1. A compound having the general Formula I 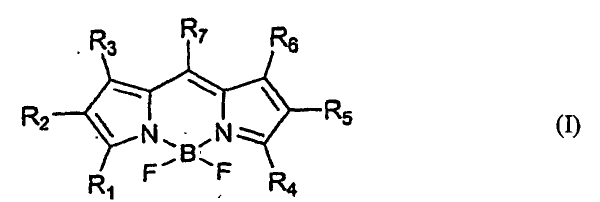 in which one of the groups R₁, R₂, R₃, R₄, R₅, R₆ and R₇ represents an ionophoric moiety which reacts with an analyte present in a sample, wherein the mother substance of the general Formula I (=luminophoric moiety) changes its luminescence properties, and the remaining groups each independently are hydrogen, a lipophilic or hydrophilic group or a reactive group for coupling to a polymer or a biomolecule, or R₂ forms an aromatic ring system together with R₃ and R₅ forms an aromatic ring system together with R₆.

2. A compound according to claim 1, **characterized in that** R₇ represents the ionophoric moiety and R₃ and R₆ independently mean hydrogen or methyl.

3. A compound according to any of claims 1 or 2, **characterized in that** the moieties R₁ and R₄ represent a lipophilic group, in particular a tert. butyl each.

4. A compound according to any of claims 1 to 3, **characterized in that** the ionophoric moiety is a diaza-cryptand having the general Formula II 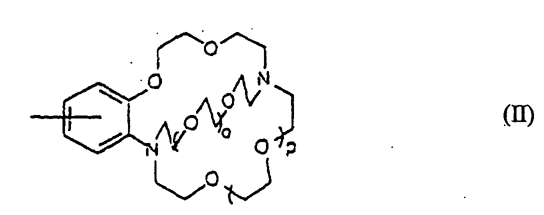 in which o and p independently mean the integer 0, 1 or 2,
or is one of the following moieties 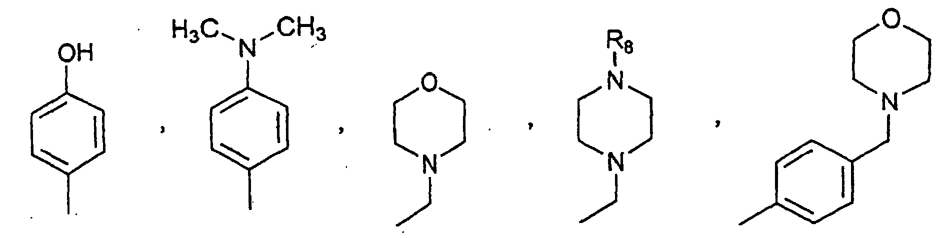 with R₈ = alkyl with 1-20 C atoms.

5. A diaza-cryptand according to claim 4 for determining lithium ions, **characterized in that** o and p mean the numbers 0 and 0, respectively.

6. A diaza-cryptand according to claim 4 for determining sodium ions, **characterized in that** o and p mean the numbers 0 and 1, respectively, or the numbers 1 and 0, respectively.

7. A diaza-cryptand according to claim 4 for determining potassium ions, **characterized in that** o and p mean the numbers 1 and 1, respectively.

## Revendications

1. Composé de formule générale I, 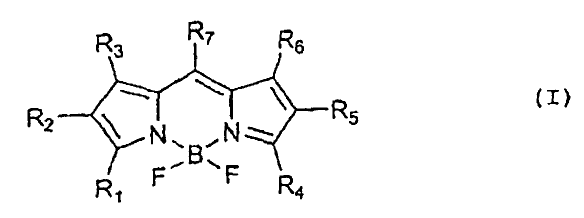 dans laquelle l'un des groupes R₁, R₂, R₃, R₄, R₅, R₆ et R₇ sont un résidu inophore, réagissant avec un analyte contenu dans un échantillon, le corps de base de formule générale I (= résidu luminophore) modifiant ses propriétés de luminescence, et les autres groupes sont chacun indépendamment l'un de l'autre l'hydrogène, un groupe lipophile ou hydrophile ou un groupe réactif, pour couplage à un polymère ou à une biomolécule, ou R₂ conjointement avec R₃ forme un système en anneau aromatique et R₅ conjointement avec R₆ forme un système en anneau aromatique.

2. Liaison selon la revendication 1, **caractérisée en ce que** R₇ est le résidu ionophore et R₃ et R₆ sont, indépendamment l'un de l'autre, l'hydrogène ou un radical méthyle.

3. Composé selon l'une des revendications 1 à 2, **caractérisé en ce que** les résidus R₁ et R₄ sont un groupe lipophile, en particulier chaque fois pour du tert.butyl.

4. Composé selon l'une des revendications 1 à 3, **caractérisé en ce que** le résidu ionophore est un diazacriptant de formule générale II 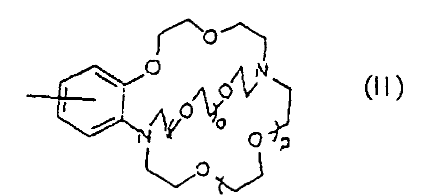 dans laquelle o et p sont, indépendamment l'un de l'autre, le nombre entier 0, 1 ou 2,
ou l'un des résidus suivants 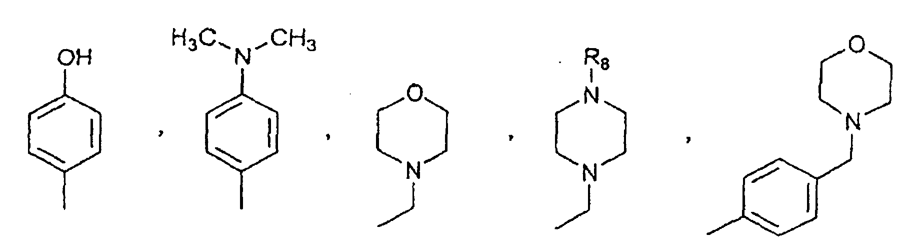 avec R₈ = un radical alkyle avec de 1 à 20 atomes de C.

5. Diaza-criptant selon la revendication 4, pour la détermination d'ions lithium, **caractérisé en ce que** o et p sont les nombres 0, respectivement 0.

6. Diaza-criptant selon la revendication 4, pour la détermination d'ions sodium, **caractérisé en ce que** o et p signifient les nombres 0, respectivement 1, ou bien les nombres 1, respectivement 0.

7. Diaza-criptant selon la revendication 4, pour la détermination d'ions potassium, **caractérisé en ce que** o et p sont les nombres 1, respectivement 1.
